# FASCICULE DE BREVET EUROPEEN

(11) **EP 2 990 885 B1**
(45) Date de publication et mention de la délivrance du brevet: **26.07.2017**
(21) Numéro de dépôt: 14182532.3
(22) Date de dépôt: 27.08.2014
(51) Int. Cl.: G04C 5/00, G04B 17/32, G04B 37/02

(54) **Mouvement horloger mécanique à échappement magnétique**
Mechanisches Uhrwerk mit magnetischem Hemmungsmechanismus
Mechanical clock movement with magnetic escapement

(43) Date de publication de la demande: 02.03.2016
(60) Demande divisionnaire: 17174621.7
(73) Titulaire: ETA SA Manufacture Horlogère Suisse, 2540 Grenchen (CH)
(72) Inventeur: Winkler, Pascal, 2074 Marin (CH); Helfer, Jean-Luc, 2525 Le Landeron (CH); Conus, Thierry, 2543 Lengnau (CH); Di Domenico, Gianni, 2000 Neuchâtel (CH); Born, Jean-Jacques, 1110 Morges (CH)
(74) Mandataire: Surmely, Gérard

(56) Documents cités:
- WO-A1-2013/084040
- WO-A1-2013/084042
- FR-A- 1 038 519
- FR-A1- 2 054 540

## Description

### Domaine technique

La présente invention concerne un mouvement horloger mécanique équipé d'un dispositif régulateur de sa marche formé par un résonateur associé à un échappement. Par échappement, on comprend dans le domaine horloger un système formé par un mécanisme d'entretien de l'oscillation du résonateur et par un mécanisme de comptage de cette oscillation pour cadencer l'entraînement d'un affichage d'au moins une information temporelle. Le résonateur et le mécanisme d'entretien de son oscillation définissent ensemble un oscillateur. On notera que généralement le mécanisme d'entretien et le mécanisme de comptage sont formés par un seul et même mécanisme de distribution de l'énergie, fournie par un dispositif moteur, qui assure les deux fonctions.

Plus particulièrement, la présente invention s'intéresse à augmenter le facteur de qualité du dispositif régulateur pour améliorer la précision de la marche du mouvement horloger mécanique, notamment d'améliorer l'isochronisme de l'oscillateur et de diminuer la puissance dissipée par le dispositif régulateur.

### Arrière-plan technologique

Pour augmenter le facteur de qualité d'un dispositif régulateur d'un mouvement horloger, il a déjà été proposé de diminuer des frottements de l'air sur le résonateur.

Afin de diminuer les frottements de l'air sur un résonateur, notamment sur le balancier-spiral d'un mouvement horloger mécanique, il est connu du document FR 2054540 d'incorporer entièrement ce mouvement dans un boîtier étanche à l'air, à l'intérieur duquel on réduit la pression en dessous de la pression atmosphérique pour obtenir une faible pression ou pression réduite dans ce boîtier. Pour effectuer le réglage de la fréquence d'oscillation du balancier-spiral, ce document prévoit un système de deux lames bimétalliques agissant sur la raquette classique lorsque l'une ou l'autre de ces lames est chauffée soit par un courant électrique fourni au travers de contacts électriques agencés dans le fond du boîtier, soit par un faisceau lumineux au travers d'un verre du boîtier.

Dans une deuxième réalisation avec un mouvement électronique, il est prévu de placer un oscillateur électromagnétique dans une enceinte hermétiquement fermée dans laquelle seuls cet oscillateur et ses moyens d'entretien et de réglage sont logés. L'oscillation du balancier est entretenue par deux bobines associées à des aimants portés par ce balancier. Le réglage de la longueur active du spiral est effectuées de manière similaire à la réalisation précédente par un courant électrique fourni à des lames bimétalliques. Comme on peut le voir à la FIG. 4 du document FR 2054540, l'oscillateur est relié au reste du mouvement électronique seulement par des liaisons électriques au travers d'une paroi de l'enceinte. On remarquera que l'agencement de liaisons électriques au travers d'une enceinte hermétique ne pose pas de problème particulier.

On constate donc que le document FR 2054540, publié en 1971, enseigne de mettre l'oscillateur dans une propre enceinte hermétique pour un mouvement électronique, alors que pour un mouvement mécanique il est prévu d'incorporer l'entier du mouvement horloger dans un boîtier étanche et de réduire la pression dans ce boîtier de montre. On peut constater que cet enseignement a prévalu dans le domaine horloger. Etant donné que la réalisation proposée pour un mouvement électronique est relativement aisée à fabriquer, notamment pour un résonateur à quartz, cet enseignement s'est imposé pour les mouvements électroniques. Par contre, pour les mouvements mécaniques, divers problèmes importants n'ont pas permis la réalisation de manière industrielle de montres mécaniques ayant leurs mouvements logés chacun dans un boîtier hermétique où règne une pression réduite.

Premièrement, les montres mécaniques ont généralement des organes mécaniques de réglage et/ou d'actionnement de diverses fonctions qui traversent le boîtier; ce qui complique la conception du boîtier pour que ce dernier assure, sur une longue période, le maintien d'une pression réduite relativement stable. Ensuite, dans le cas d'un service après-vente nécessitant une ouverture du boîtier, on doit disposer de moyens permettant de faire à nouveau un vide d'air dans ce boîtier jusqu'à une faible pression donnée. De plus, étant donné que le réglage de la fréquence du résonateur dépend de la pression environnante, ce réglage pose un problème de fabrication. La solution consistant à agir, à l'aide de lames bimétalliques, sur une raquette en fournissant un courant électrique ou un faisceau de lumière via le fond du boîtier, une fois le mouvement emboîté et la faible pression établie, pose notamment un problème de précision d'un tel réglage et un problème de procédé de fabrication puisque le réglage individuel de chaque montre doit se faire une fois le mouvement emboîté.

Récemment, le document WO 2013/084040 a cherché à résoudre le problème du réglage du balancier-spiral d'une montre mécanique ayant un boîtier de montre dans lequel il est prévu une pression réduite pour augmenter le facteur de qualité de cet oscillateur. Ce document propose une solution dans laquelle le réglage se fait à pression ambiante, en tenant compte d'une différence de réglage mesurée pour une marche à pression ambiante et une marche à pression réduite déterminée. Toutefois, on remarquera que ce document demeure dans le concept du document précédent en proposant de placer entièrement le mouvement horloger dans un boîtier de montre à l'intérieur duquel un vide d'air est effectué pour obtenir la pression réduite souhaitée. Ainsi, hormis un procédé permettant de d'éliminer un dispositif particulier dans la montre pour effectuer le réglage de la marche de celle-ci sous pression réduite, tous les autres problèmes demeurent.

### Résumé de l'invention

La présente invention a pour but de résoudre les problèmes de l'art antérieur pour les montres équipées d'un mouvement mécanique dans lesquelles il est prévu d'augmenter le facteur de qualité de l'oscillateur en réduisant les frottements dus à l'air agissant sur le résonateur. De plus, la présente invention a aussi pour objectif de fournir une montre mécanique permettant de laisser l'enceinte hermétiquement fermée également lors de services d'entretien, en particulier lorsque l'huile prévue classiquement au niveau des paliers de divers mobiles doit être renouvelée ou qu'une certaine quantité d'une telle huile doit simplement être ajoutée pour assurer une lubrification correcte des mobiles du mouvement mécanique.

A cet effet, la présente invention a pour objet un mouvement horloger mécanique comprenant un résonateur, un échappement associé à ce résonateur et un affichage d'au moins une information temporelle, cet affichage étant entraîné par un dispositif moteur mécanique via un rouage compteur dont la marche est cadencée par l'échappement. Au moins le résonateur est logé dans une enceinte fermée hermétiquement dans laquelle règne une pression réduite relativement à la pression atmosphérique. Selon l'invention, l'échappement est un échappement magnétique comprenant une roue d'échappement couplée directement ou indirectement au résonateur via un système de couplage magnétique. Ce système de couplage magnétique est formé d'au moins un premier élément magnétique et un deuxième élément magnétique présentant au moins périodiquement entre eux une interaction magnétique. L'enceinte fermée hermétiquement comprend une paroi qui passe entre les premier et deuxième éléments magnétiques de sorte que le premier élément magnétique est à l'intérieur de l'enceinte alors que le deuxième élément magnétique et la roue d'échappement sont à l'extérieur de cette enceinte, la paroi étant agencée pour permettre ladite interaction magnétique au travers de cette paroi.

Par échappement magnétique, on comprend un échappement dont au moins deux de ses organes sont couplés magnétiquement sans contact.

Selon un mode de réalisation particulier, le dispositif moteur mécanique, le rouage compteur et le dispositif d'affichage sont situés hors de l'enceinte fermée hermétiquement dans laquelle règne la pression réduite. Ainsi la mise à l'heure et diverses autres commandes des fonctions du mouvement mécanique peuvent se faire de manière classique au travers d'un boîtier étanche à l'eau et agissant sur la partie du mouvement non logée dans l'enceinte à faible pression.

Selon un mode de réalisation préféré, le mouvement mécanique ne comprend dans l'enceinte fermée hermétiquement aucun mobile pivotant avec un frottement mécanique dans des paliers. Ainsi, il n'y a pas besoin de fournir de l'huile pour limiter le frottement mécanique et avoir un frottement de glissement avec un film d'huile. Ainsi, premièrement aucun renouvellement d'huile n'est à prévoir dans l'enceinte fermée hermétiquement. Ensuite, il n'y a aucun risque de générer des poussières dues au pivotement d'un mobile dans le trou d'un palier mécanique. De plus, cette caractéristique particulière permet d'augmenter la précision de marche de la montre car on minimise les différences de marche entre diverses positions possibles de la montre. Finalement, une telle réalisation permet encore de diminuer la puissance nécessaire à l'entretien du résonateur et permet donc d'augmenter la réserve de marche de la montre.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 est un schéma-bloc d'un premier mode de réalisation général d'un mouvement horloger mécanique selon l'invention;
- La Figure 2 est un schéma-bloc d'un deuxième mode de réalisation général d'un mouvement horloger mécanique selon l'invention;
- La Figure 3 montre, en vue de dessus, partiellement un troisième mode de réalisation particulier d'un mouvement horloger mécanique selon l'invention;
- La Figure 4 est une vue en coupe partielle, selon la ligne IV-IV, du mouvement horloger de la Figure 3;
- La Figure 5 montre, en vue de dessus, partiellement un quatrième mode de réalisation particulier d'un mouvement horloger mécanique selon l'invention;
- La Figure 6 est une vue en coupe partielle, selon la ligne VI-VI, du mouvement horloger de la Figure 5;
- La Figure 7 montre, en vue de dessus, partiellement un cinquième mode de réalisation particulier d'un mouvement horloger mécanique selon l'invention;
- La Figure 8 est une vue en coupe partielle, selon la ligne VIII-VIII, du mouvement horloger de la Figure 7; et
- Les Figures 9A, 9B, 9C et 9D montrent quatre positions successives du système de couplage magnétique entre un volant de balancier et un arrêtoir prévu dans le cinquième mode de réalisation.

### Description détaillée de l'invention

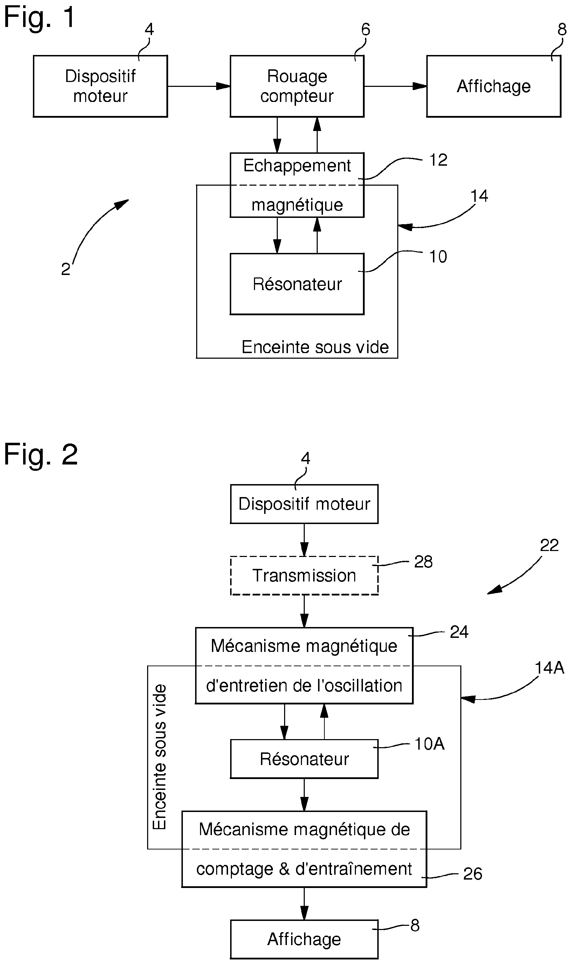

A la Figure 1 est représenté de manière schématique au moyen d'un schéma-bloc un premier mode de réalisation général d'un mouvement mécanique selon l'invention. Ce mouvement mécanique 2 comprend un dispositif moteur mécanique 4, par exemple un barillet à remontage manuel ou à remontage automatique, un rouage compteur 6 entraîné par le dispositif moteur et un affichage analogique 8 d'au moins une information temporelle entraîné par le rouage compteur de manière connue. Le mouvement 2 comprend également un dispositif régulateur de sa marche formé par un résonateur 10 et selon l'invention un échappement magnétique 12 comprenant un système de couplage magnétique sans contact. Selon l'invention, le résonateur 10 et une partie de l'échappement magnétique sont logés dans une enceinte 14 fermée hermétiquement où règne une pression réduite relativement à la pression atmosphérique. Dans ce premier mode de réalisation général, le dispositif moteur, le rouage compteur et le dispositif d'affichage sont situés hors de l'enceinte 14. Cette enceinte comprend une paroi qui passe au travers de l'échappement magnétique et plus précisément de son système de couplage magnétique sans contact, c'est-à-dire entre des éléments magnétiques de ce système engendrant ledit couplage magnétique sans contact, tout en garantissant le fonctionnement de l'échappement magnétique, à savoir l'entretien de l'oscillation du résonateur 10 et le comptage de ses oscillations pour permettre un cadencement du rouage compteur. Selon une caractéristique particulière, la paroi de l'enceinte 14 est amagnétique au moins dans une région où est situé le système magnétique

A la Figure 2 est représenté de manière schématique au moyen d'un schéma-bloc un deuxième mode de réalisation général d'un mouvement mécanique selon l'invention. Ce mouvement mécanique 22 comprend également un dispositif moteur mécanique 4 et un affichage analogique 8 d'au moins une information temporelle. Ce deuxième mode de réalisation général se distingue de celui de la Figure 1 par le fait que le mécanisme magnétique 24 d'entretien de l'oscillation du résonateur 10A et le mécanisme magnétique 26 de comptage des oscillations de ce résonateur, qui forment ensemble un échappement horloger, sont distincts l'un de l'autre. Le mécanisme magnétique 26 a ici aussi une fonction d'entraînement du dispositif d'affichage, tout comme le résonateur 10A. Cette réalisation est particulière car le résonateur et l'échappement magnétique sont inclus dans la chaîne cinématique entre le dispositif moteur et le dispositif d'affichage et ne servent donc pas seulement à la régulation d'au moins un rouage compteur. De manière optionnelle, un rouage de transmission 28 est agencé entre le dispositif moteur 4 et le mécanisme magnétique 24.

On remarquera que le mécanisme magnétique d'entretien de l'oscillation peut dans sa conception être similaire à un échappement magnétique du type de celui du premier mode de réalisation, et donc correspondre par exemple à un des modes de réalisation particuliers qui seront décrits par la suite. La même remarque s'applique au mécanisme magnétique de comptage et d'entrainement. En particulier, au moins l'un de ces deux mécanismes magnétiques comprend une roue d'échappement couplée directement ou indirectement au résonateur 10A via un système de couplage magnétique. Ce système de couplage magnétique est formé d'au moins un premier élément magnétique et un deuxième élément magnétique présentant au moins périodiquement entre eux une interaction magnétique. Selon l'invention, il est prévu une enceinte fermée hermétiquement 14A qui comprend une paroi passant entre les premier et deuxième éléments magnétiques de sorte que le premier élément magnétique est à l'intérieur de l'enceinte alors que le deuxième élément magnétique et la roue d'échappement sont à l'extérieur de cette enceinte. La paroi est agencée pour permettre ladite interaction magnétique au travers de cette paroi.

Dans une variante préférée, les deux mécanismes magnétiques 24 et 26 sont du même type et comprennent chacun une roue. La roue du mécanisme 24 transmet l'énergie du dispositif moteur au résonateur pour entretenir ses oscillations et en plus pour lui permettre d'entraîner à son tour le mécanisme 26 et le dispositif d'affichage 8. La roue du mécanisme 26 est une roue formant un rouage compteur des oscillations du résonateur, ce rouage compteur entraînant le dispositif d'affichage. Ainsi, dans cette variante préférée, les deux mécanismes magnétiques 24 et 26 comprennent chacun une roue d'échappement couplée directement ou indirectement au résonateur 10A via un système de couplage magnétique et l'enceinte 14A comprend une première paroi qui passe au travers d'un premier système de couplage magnétique sans contact du mécanisme 24, c'est-à-dire entre des éléments magnétiques de ce premier système engendrant le couplage magnétique sans contact, et une deuxième paroi qui passe au travers d'un deuxième système de couplage magnétique sans contact du mécanisme 26, c'est-à-dire entre des éléments magnétiques de ce deuxième système engendrant le couplage magnétique sans contact. Comme plusieurs mécanismes magnétiques formant des échappements magnétiques peuvent avoir un fonctionnement réversible moyennant quelles adaptations, l'homme du métier comprendra aisément que les réalisations concrètes données par la suite pour le premier mode de réalisation général, à titre d'exemples nullement limitatifs, peuvent également s'appliquer à l'un ou l'autre des deux mécanismes 24 et 26 formant l'échappement magnétique du deuxième mode de réalisation général. Dans un premier mode de fonctionnement, l'énergie est transmise de la roue d'échappement au résonateur, et dans un second mode de fonctionnement l'énergie est transmise du résonateur à la roue d'échappement. Souvent, il faut introduire une asymétrie dans le mécanisme pour définir le sens de rotation. Ainsi, par exemple, les palettes et dents des dispositifs à ancre motrice sont légèrement différents des palettes et dents d'un échappement classique. L'homme du métier saura en tenir compte pour la réalisation du mécanisme magnétique de comptage des oscillations du résonateur et d'entraînement du dispositif d'affichage.

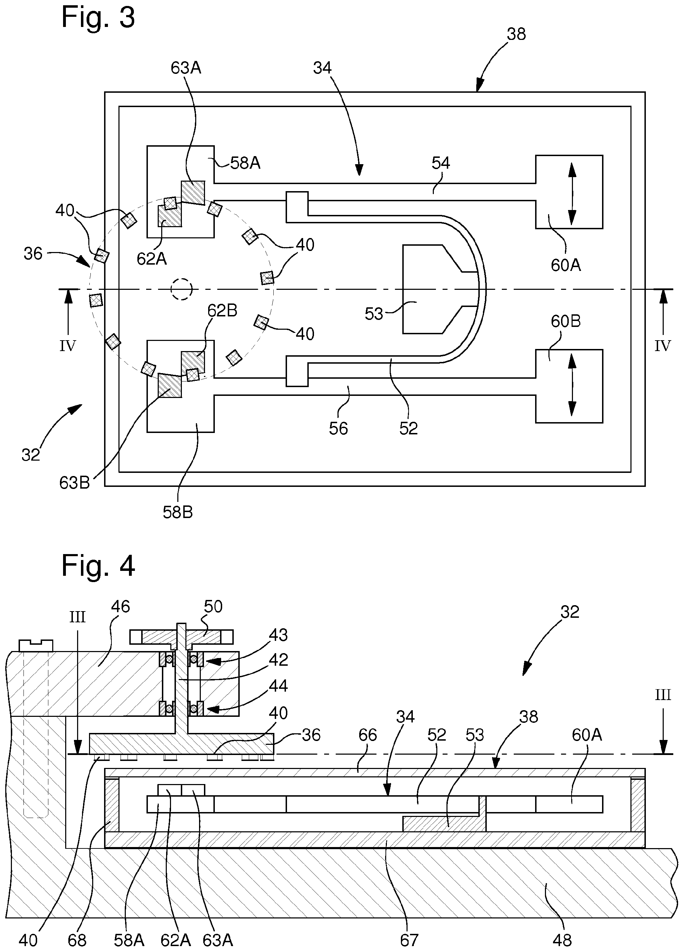

Un troisième mode de réalisation d'un mouvement horloger selon l'invention est décrit ci-après en référence aux Figures 3 et 4. Le mouvement horloger mécanique 32 est représenté seulement partiellement aux figures de manière à mettre en évidence les caractéristiques propres à l'invention qui concernent le dispositif régulateur de ce mouvement. Ce troisième mode de réalisation ainsi que les autres modes de réalisation qui seront décrits par la suite sont des réalisations particulières du premier mode de réalisation général décrit précédemment. Hormis une roue ou un pignon servant au couplage mécanique de la roue d'échappement au dispositif moteur et au rouage compteur, ce dispositif moteur et ce rouage compteur ainsi que le dispositif d'affichage ne sont ni représentés aux figures, ni décrits en détails, étant donné qu'ils sont connus de l'homme du métier. En effet, la présente invention est remarquable par le fait que ces parties du mouvement mécanique et les dispositifs qui leur sont généralement associés, notamment le dispositif de remontage, le dispositif de correction des informations temporelles et d'autres dispositifs de commande, par exemple pour un chronographe, sont usuels. Evidemment, l'homme du métier saura sélectionner un rouage compteur adapté à la fréquence d'oscillation du résonateur et il pourra aisément concevoir plusieurs agencements spatiaux des diverses parties du mouvement horloger incorporant un dispositif régulateur selon l'invention avec le résonateur et une partie de l'échappement logés dans une enceinte hermétiquement fermée.

Le dispositif régulateur de la marche du mouvement horloger 32 comprend un résonateur 34 et une roue d'échappement 36 directement couplée magnétiquement au résonateur. Ce résonateur est logé dans une enceinte 38 hermétiquement fermée dans laquelle règne une pression réduite relativement à la pression atmosphérique, alors que la roue d'échappement est prévue hors de cette enceinte. De préférence, la pression réduite est prévue inférieure ou sensiblement égale à un millibar (1 mbar). Dans une variante préférée, il est prévu d'introduire dans l'enceinte un piège à gaz, nommé aussi un getter, pour absorber des gaz résiduels après fermeture hermétique de cette enceinte. Un tel dispositif permet de diminuer encore la pression à l'intérieur de l'enceinte et aussi de détecter si cette enceinte n'a pas de fuite ou ne perd pas son étanchéité à l'air après une certaine période. La roue d'échappement est fixée à une première extrémité d'un arbre 42 monté dans un double roulement à billes 43 & 44 qui assure le guidage de cet arbre et permet une rotation stable de la roue 36 autour d'un axe de rotation déterminé. Ce double roulement à billes est monté dans un pont 46 qui est fixé solidement par au moins une vis à une platine 48 sur une surface de laquelle est agencée l'enceinte 38. Une petite roue 50 est fixée à la seconde extrémité de l'arbre 42. Cette petite roue sert au couplage du dispositif régulateur avec le barillet et le rouage compteur du mouvement horloger. On notera que cette petite roue forme généralement un pignon engrenant avec un mobile de la chaîne cinématique entre le barillet et l'affichage. La roue d'échappement 36 porte une pluralité d'aimants 40 présentant une direction d'aimantation parallèle à l'axe de rotation de cette roue. Cette pluralité d'aimants forme des éléments magnétiques d'une première partie d'un système de couplage magnétique entre cette roue et le résonateur, ce système formant l'échappement magnétique.

Le résonateur 34 est formé par un diapason 52 monté en son centre sur un socle 53 et portant à l'extrémité de ses deux branches respectivement deux barrettes 54 et 56. Chaque barrette comprend à une première extrémité une plaquette 58A, respectivement 58B, portant deux aimants étendus 62A et 63A, respectivement 62B et 63B formant des éléments magnétiques d'une seconde partie du système de couplage magnétique formant l'échappement magnétique. Ces aimants ont une direction d'aimantation également parallèle à l'axe de rotation de la roue 36. Chaque barrette comprend en outre un contrepoids 60A, respectivement 60B servant à équilibrer le résonateur 34 et éventuellement à compenser des forces magnétiques du système de couplage magnétique. Seul le résonateur 34 est agencé dans l'enceinte 38, laquelle comprend une paroi amagnétique 66, notamment une plaquette de cristal, qui passe entre les aimants 40 de la roue d'échappement et les aimants 62A, 63A, 62B, 63B fixés au résonateur. L'épaisseur de cette plaquette 66 est prévue aussi petite que possible de sorte que la distance entre les aimants 40 et les aimants portés par le résonateur soit également aussi petite que possible pour assurer une interaction magnétique suffisamment forte entre les première et seconde parties du système de couplage magnétique de l'échappement magnétique. L'enceinte 38 est constituée par une plaquette 67, à laquelle est fixée le socle 53 du résonateur, une paroi latérale 68, venue de matière avec la plaquette 67 ou assemblée à celle-ci de manière étanche, et la paroi 68 définissant un couvercle qui est collé ou soudé par un moyen connu à la paroi latérale. Le vide d'air dans cette enceinte est effectué par des moyens connus de l'homme du métier, notamment en fermant le couvercle dans une chambre à pression réduite ou par un trou prévu dans la paroi latérale de l'enceinte et fermé ensuite hermétiquement. On remarquera que diverses variantes peuvent être prévues pour l'enceinte. En particulier, la paroi 66 peut avoir une faible épaisseur seulement dans la région superposée à la roue 36. De plus, pour rigidifier l'enceinte, des entretoises peuvent être agencées dans l'enceinte entre le fond 67 et le couvercle 66, notamment entre les deux branches du diapason.

Le fonctionnement de l'échappement magnétique de ce troisième mode de réalisation ne sera pas décrit ici en détails. L'homme du métier trouvera des explications détaillées ainsi que des modes de réalisation perfectionnés d'un tel échappement magnétique dans la demande de brevet européenne EP_14176816 où dans une demande de brevet revendiquant la priorité de cette demande européenne. De manière générale, un couple de force est fourni à la roue d'échappement 36 par le dispositif moteur via la roue-pignon 50 pour entraîner en rotation cette roue d'échappement. Les aimants sont configurés et agencés de manière que la rotation de la roue 36 excite le résonateur de sorte que les branches du diapason commence à vibrer et les plaquettes 58A et 58B à osciller. L'interaction magnétique entre les aimants, dans une variante en répulsion magnétique, est prévue de manière que le système de couplage magnétique accumule périodiquement de l'énergie potentielle magnétique qu'il redonne au moins en majeure partie au résonateur dans chaque période lorsqu'un aimant 40 sort radialement d'une des zones aimantées 62A,63A,62B ou 63B, ces zones aimantées subissant un mouvement de va-et-vient sensiblement selon la direction radiale de la roue d'échappement. Ainsi l'oscillation du résonateur est entretenue. De plus, dans une plage de couple déterminée, le système de couplage magnétique assure une synchronisation entre la fréquence d'oscillation du résonateur et la vitesse angulaire de la roue d'échappement. Dans une variante principale, la plaquette 58A, respectivement 58B, effectue une période d'oscillation alors que la roue 36 effectue une rotation d'une période angulaire définie par la distance angulaire entre les centres de deux aimants adjacents 40. On notera que, dans une variante de réalisation du système de couplage magnétique, les aimants 40 ou les aimants portés par le résonateur peuvent être remplacés par des éléments en matériau ferromagnétique. Dans une autre variante, les aimants sont agencés en attraction magnétique.

Dans une variante particulière, il est prévu un autre type de résonateur comprenant un balancier ayant un arbre formé au moins partiellement par un matériau magnétique et pivotant sensiblement sans frottement mécanique entre deux paliers magnétiques. Une réalisation de ce type sera exposée par la suite. Dans une autre variante particulière, le résonateur est formé par un volant de balancier et des lames flexibles qui relient ce volant à l'enceinte, ces lames flexibles étant agencées pour permettre au balancier d'avoir une oscillation avec une fréquence déterminée. Une réalisation de ce type sera également exposée par la suite.

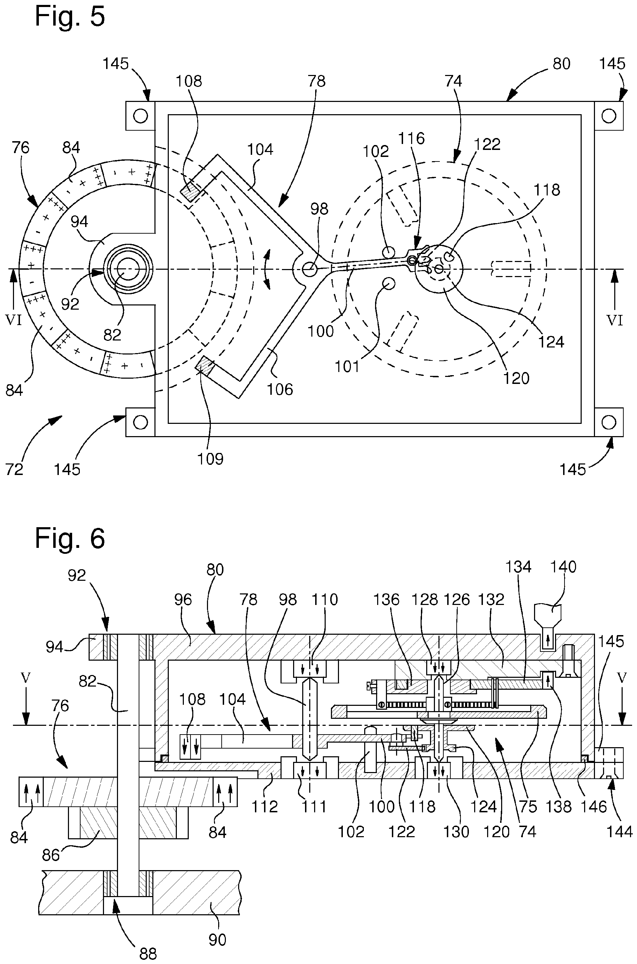

Un quatrième mode de réalisation d'un mouvement horloger selon l'invention est décrit ci-après en référence aux Figures 5 et 6. Le mouvement horloger mécanique 72 comprend un résonateur 74 et une roue d'échappement 76 qui sont couplées par un organe intermédiaire 78 non solidaire du résonateur ou de la roue d'échappement et oscillant de manière synchrone avec le résonateur. De manière générale, l'organe intermédiaire a une première partie directement couplée au résonateur et une deuxième partie, distincte de la première partie, qui est directement couplée à la roue d'échappement. Dans ce troisième mode de réalisation, le système de couplage magnétique de l'échappement magnétique est prévu entre la deuxième partie de l'organe intermédiaire et la roue d'échappement. Le résonateur 74 et l'organe intermédiaire 78 sont situés à l'intérieur de l'enceinte 80 fermée hermétiquement. Dans la variante représentée aux Figures 5 et 6, le résonateur est formé par un balancier-spiral classique, toutefois avec des moyens de réglage spécifiques adaptés à l'invention, et l'organe intermédiaire définit un arrêtoir bistable.

La roue d'échappement 76 comprend un anneau aimanté périphérique définissant une pluralité de zones aimantées 84. Cette pluralité de zones aimantées définit une période magnétique angulaire et forme une première partie d'un système de couplage magnétique de l'échappement magnétique du mouvement horloger 72. La roue 76 est montée fixement sur un arbre 82 dont les deux extrémités sont respectivement insérées dans deux roulements à billes 88 et 92, ces derniers étant respectivement agencés dans une platine 90 et dans une plaquette 94 qui fait saillie de l'enceinte 80 au niveau de son fond 96. Un pignon d'échappement 86 est également monté fixement sur l'arbre 82, ce pignon servant au couplage mécanique avec le dispositif moteur et le rouage compteur du mouvement horloger. L'organe intermédiaire 78 forme une ancre qui s'apparente dans son fonctionnement à une ancre d'un échappement à ancre suisse, toutefois le couplage entre l'ancre et la roue d'échappement est ici magnétique. L'ancre est montée sur un arbre 98 et elle comprend, d'une part, une baguette 100 terminée par une fourchette 116 et un dard 122 et, d'autre part, deux bras 104 et 106 portant à leurs extrémités respectives deux aimants 108 et 109, ces deux aimants formant une seconde partie du système de couplage magnétique de l'échappement magnétique. L'ancre oscille entre deux positions stables définies par deux goupilles 101 et 102.

Bien que l'échappement soit du type magnétique, l'ancre étant couplée magnétiquement à une roue d'échappement formée par une structure annulaire aimantée, ce mode de réalisation est remarquable par le fait que le couplage mécanique entre l'ancre 78 et le balancier 75 du résonateur est identique à celui d'un échappement à ancre suisse classique. Le balancier porte ainsi sur son arbre 126 un grand plateau 120 auquel est fixé une cheville 118, nommée aussi ellipse, et un petit plateau présentant une encoche pour le dard 122. Ce système de couplage mécanique permet d'une part d'entretenir les oscillations du balancier-spiral et, d'autre part, d'entraîner l'ancre par intermittence dans un mouvement de va-et-vient entre ses deux positions stables, ce mouvement définissant une oscillation qui est synchrone avec celle du balancier-spiral. Le mouvement d'oscillation de l'ancre permet aux aimants 108 et 109 d'avoir alternativement une interaction magnétique avec les zones aimantées 84 de la roue d'échappement 76. Chaque zone aimantée 84 est prévue de préférence avec une rampe magnétique angulaire formée par un matériau aimanté engendrant un flux magnétique qui augmente angulairement, ce qui est indiqué aux figures par le signe '-' suivi du signe '+'. A la suite de cette rampe magnétique est prévue une barrière de potentiel magnétique, indiquée par le signe '+++', qui sert à stopper angulairement la rotation de la roue 76 grâce au système de couplage magnétique. Cette barrière de potentiel forme donc une butée magnétique. Elle est engendrée par un aimant fournissant un champ magnétique de plus forte intensité, suffisant pour que le couple résultant sur la roue d'échappement soit supérieur au couple fourni à la roue d'échappement par le dispositif moteur. Chaque zone 84 peut dans une variante être formée par trois aimants adjacents ayant des aimantations dont l'intensité augmente dans le sens horaire d'un aimant au suivant. Dans une autre variante, on a seulement deux aimants par zone, la première partie de chaque zone, indiquée par le signe '-', étant sans matière aimantée.

Concernant le fonctionnement de cet échappement magnétique, dans la configuration représentée à la Figure 5, l'aimant 108 porté par le bras 104 est en butée contre une barrière magnétique d'une zone 84 de la piste magnétique annulaire, alors que l'aimant 109 porté par l'autre bras est hors de cette piste magnétique annulaire, c'est-à-dire non superposé à celle-ci et sensiblement sans interaction avec cette dernière. Ensuite, lorsque le balancier 75 entre dans l'alternance suivante et tourne dans le sens antihoraire, la cheville entre dans la fourchette 116 et entraîne l'ancre en direction de la goupille 101 (situation représentée à la Figure 6). Il résulte de cet entraînement de l'ancre par le résonateur que l'aimant 108 sort de la piste magnétique annulaire alors que l'aimant 109 entre au-dessus de cette piste dans la partie non ou faiblement aimantée d'une zone 84. Ceci engendre un couple de force sur l'ancre dans le sens de son mouvement et la fourchette 116 fournit alors au résonateur une impulsion d'entretien de son oscillation. Ensuite, la roue 76 tourne jusqu'à ce que l'aimant 109 arrive en butée contre la barrière de potentiel magnétique de la zone 84 dans laquelle il est entré. Lors de la prochaine alternance du balancier, ce phénomène se répète en inversant les rôles des deux aimants 108 et 109, et ainsi de suite. On comprend donc que la roue 76 tourne de manière saccadée avec une vitesse angulaire et donc une fréquence synchrone de la fréquence d'oscillation du balancier-spiral 74. On notera que le fonctionnement cinématique de l'échappement magnétique décrit ci-avant est similaire à celui de l'échappement à ancre suisse usuel. L'homme du métier trouvera des explications complémentaires ainsi que des modes de réalisation particuliers d'un tel échappement magnétique dans la demande de brevet européenne EP_13199427 où dans une demande de brevet revendiquant la priorité de cette demande européenne.

Le balancier-spiral et l'ancre sont logés dans une enceinte 80 où règne une faible pression relativement à la pression atmosphérique. Cette enceinte est fermée par une plaquette 112 amagnétique, par exemple en cristal transparent. Dans la région de superposition entre la roue d'échappement et l'ancre 78, la plaquette est amincie pour réduire au maximum la distance entre les aimants de l'ancre et les zones aimantées de la roue d'échappement entre lesquels passe selon l'invention cette plaquette formant une paroi de l'enceinte fermée hermétiquement. Dans la variante représentée, la plaquette 112 définit un couvercle qui est visé sur la boîte, dans laquelle sont agencés le résonateur, des moyens de réglage de sa fréquence et l'ancre, au moyen de vis reliant rigidement des parties saillantes 144 et 145 respectivement du couvercle et de la boîte. Pour assurer une fermeture étanche à l'air, un joins 146 est prévu. La boîte est par exemple formée par du laiton. Dans une variante, toutes les parois de l'enceinte sont transparentes.

Pour régler la fréquence d'oscillation du balancier-spiral, on a prévu un dispositif qui s'apparente à un dispositif classique avec une raquette 134 montée sur un porte-piton 136, mais spécifique à la présente invention par le fait que le coq 132 (pont de balancier) est agencé au-dessus de cette raquette et du porte-piton, relativement au balancier-spiral, contrairement à une construction usuelle, et que la raquette est agencée au-dessus du porte-piton, ce qui nécessite des goupilles plus longues que dans une réalisation classique. Le montage de ces deux organes sur le coq est réalisé de manière similaire à une réalisation classique et le coq peut être fixé au fond de l'enceinte 80 notamment au moyen d'au moins une vis. Pour permettre de régler la longueur active du spiral une fois l'enceinte 80 fermée et le vide d'air au moins partiel réalisé, la raquette porte à une extrémité un aimant 138. Au moyen d'un outil 140, ayant à son extrémité un aimant agencé en attraction avec l'aimant 138, on peut par couplage magnétique varier la position angulaire de la raquette. Pour faciliter cette opération, en particulier si le fond 96 n'est pas transparent, une rainure est prévue dans le fond 96 de l'enceinte. On remarquera que des alternatives peuvent être envisagées pour régler la fréquence d'oscillation du résonateur. On peut par exemple prévoir un balancier avec une inertie prévue initialement trop élevée et ensuite diminuer cette inertie par ablation de matière à l'aide d'un faisceau laser au travers d'une paroi de l'enceinte prévue transparente pour la longueur d'onde de ce laser. Cette solution simple présente cependant le désavantage de ne pas permettre de diminuer à nouveau un peu la fréquence d'oscillation une fois un premier réglage effectué.

Selon une variante préférée, aucun mobile pivotant avec un frottement mécanique dans des paliers n'est compris dans l'enceinte 80. On peut ainsi éviter tout besoin de lubrification dans cette enceinte. Dans la variante représentée, l'arbre 126 du balancier 75 est formé au moins partiellement par un matériau magnétique et il pivote sensiblement sans frottement mécanique entre deux paliers magnétiques 128 et 130 représentés de manière schématique. De même, l'organe intermédiaire 78 a un arbre 98 formé au moins partiellement par un matériau magnétique et pivotant sensiblement sans frottement mécanique entre deux paliers magnétiques 110 et 111 également représentés de manière schématique. L'homme du métier a à sa disposition plusieurs documents relatifs aux paliers magnétiques pouvant être implémentés dans le domaine horloger. On peut citer notamment la demande de brevet WO_2012/062524 et les documents cités dans le rapport de recherche annexé à cette demande. On remarquera que les paliers magnétiques 111 et 130 sont agencés dans des trous effectués dans la plaquette 112 en assurant une fermeture étanche à l'air. Cependant, dans une variante, ces paliers magnétiques peuvent être agencés sur la surface interne de la plaquette 112, comme les paliers magnétiques 110 et 128. Dans ce cas, les aimants sont allongés ou les bras de l'ancre présentent chacun un décrochement ou un coude permettant d'agencer les aimants 108 et 109 à un niveau inférieur. Un tel agencement peut également permettre de prolonger avantageusement les arbres 98 et 126 du côté de la plaquette 112.

Selon une alternative, le résonateur est formé par un volant de balancier et des lames flexibles qui relient ce volant à l'enceinte, ces lames flexibles étant agencées pour permettre au balancier d'avoir une oscillation autour d'un axe de rotation géométrique avec une fréquence déterminée. Un exemple d'une réalisation pouvant être adaptée à ce quatrième mode de réalisation sera exposé par la suite. De même, à titre d'alternative pour l'organe intermédiaire, ce dernier est relié par des lames flexibles à l'enceinte, ces lames flexibles étant agencées pour permettre l'oscillation synchrone de cet organe intermédiaire avec le résonateur. Ces solutions alternatives permettent d'avoir dans l'enceinte des mobiles sans arbre pivoté. On évite ainsi toute usure ou le vieillissement d'une huile de lubrification, et donc de devoir ouvrir l'enceinte fermée hermétiquement lors d'un service d'entretien du mouvement horloger. On évite aussi le problème des tolérances de fabrication et de montage relatifs aux paliers magnétiques.

La variante du quatrième mode de réalisation représentée aux Figures 5 et 6 est remarquable par le fait que le mouvement horloger 72 incorpore en grande partie des composants et éléments de l'horlogerie traditionnelle, tout en implémentant un système de couplage magnétique sans contact entre l'ancre et la roue d'échappement permettant qu'une paroi 112 d'une enceinte 80 fermée hermétiquement soit située entre des première et deuxième parties de ce système de couplage magnétique de l'échappement.

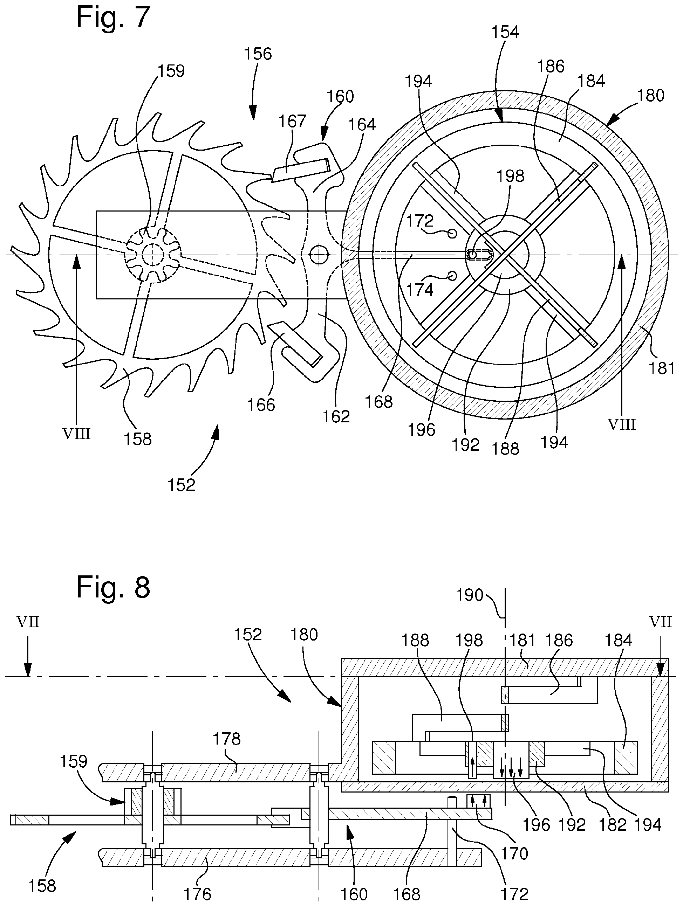

Un cinquième mode de réalisation d'un mouvement horloger selon l'invention est décrit ci-après en référence aux Figures 7, 8 et 9A à 9D. Le mouvement horloger mécanique 152 comprend un résonateur 154 et un échappement magnétique 156 représentés aux figures. Comme dans le quatrième mode de réalisation, cet échappement magnétique comprend une roue d'échappement 158 qui est couplée au résonateur par un organe intermédiaire 160 formé par une ancre définissant un arrêtoir bistable. Par contre, ce cinquième mode de réalisation se distingue du mode de réalisation précédent par le fait que le système de couplage magnétique de l'échappement magnétique est prévu entre l'ancre 160 et le résonateur, et que cette ancre est ainsi située hors de l'enceinte 180, laquelle est fermée hermétiquement et contient le résonateur. Ainsi, la roue d'échappement et l'ancre sont montées sur deux arbres respectifs qui sont pivotés dans des paliers mécaniques usuels entre une platine 176 et un pont 178 qui est venu de matière avec la boîte 181. Dans une variante, le pont 178 est un élément séparé de l'enceinte. Dans une autre variante, l'ancre a un arbre magnétique pivoté entre deux paliers magnétiques pour réduire les frottements sur cette ancre. Un pignon d'échappement 159 est monté classiquement sur l'arbre de la roue d'échappement.

Le résonateur est formé par un volant 184 de balancier et des lames flexibles 186 et 188 fixées à ce volant, ces lames flexibles étant agencées pour permettre au balancier d'avoir une oscillation sensiblement autour d'un axe géométrique 190 avec une fréquence déterminée. Dans la variante représentée, ces lames flexibles sont agencées en croix, c'est-à-dire qu'elles sont décalées de 90°. Chaque lame flexible est fixée par une première extrémité au fond de la boîte 181, formant l'enceinte 180 fermée hermétiquement, et par une deuxième extrémité, diamétralement opposée à la première extrémité, au volant 184 du balancier. Ainsi le balancier n'est pas pivoté et aucun palier n'est prévu dans l'enceinte 180. Le réglage de la fréquence d'oscillation d'un tel résonateur peut se faire au niveau des lames flexibles par un traitement thermique ou une ablation de matière à l'aide d'un faisceau laser, et au niveau de l'inertie du volant du balancier par ablation de matière également avec un laser. On notera qu'au moins un réglage terminal peut être prévu une fois l'enceinte 180 fermée de manière étanche à l'air et présentant une pression réduite.

Comme pour le mode de réalisation précédent, ce cinquième mode de réalisation est remarquable par le fait qu'il propose un échappement magnétique en partie identique à un échappement à ancre suisse classique et que le système de couplage magnétique, permettant l'implémentation de la présente invention, est agencé de manière que cet échappement magnétique ait un fonctionnement cinématique similaire à celui de l'échappement à ancre suisse. Ainsi, la roue d'échappement est classique et les deux bras 162 et 164 de l'ancre, portant respectivement deux palettes 166 et 167, couplés mécaniquement à cette roue d'échappement sont aussi classiques. Dans la variante représentée, le système de couplage magnétique entre l'ancre et le volant de balancier 184 a été conçu pour obtenir une commande de l'ancre 160 par le balancier et une génération des impulsions d'entretien de l'oscillation de ce balancier similaires à l'échappement à ancre suisse, comme décrit précédemment en relation avec le quatrième mode de réalisation. A cet effet, l'ancre comprend une baguette 168 qui porte à son extrémité un aimant oblong 170 situé à l'extérieur de l'enceinte 180, en face d'une paroi amagnétique 182 de cette enceinte. Cet aimant oblong forme une première partie du système de couplage magnétique. Il exerce deux fonctions de l'ancre en remplaçant la fourchette et le dard d'une ancre classique. Le volant 184 du balancier comprend en son centre un disque 192 relié à son volant par quatre bras 194 et portant la seconde partie du système de couplage magnétique située à l'intérieur de l'enceinte. Cette seconde partie comprend une cheville magnétique 198 formée par un aimant, agencé en attraction relativement à l'aimant de l'ancre et inséré dans un trou du disque 192 qui correspond au grand plateau d'un échappement classique, et un disque aimanté central 196 aimanté en répulsion relativement à l'aimant de l'ancre et présentant une encoche 200. Ce disque aimanté central remplace le petit plateau d'un échappement classique.

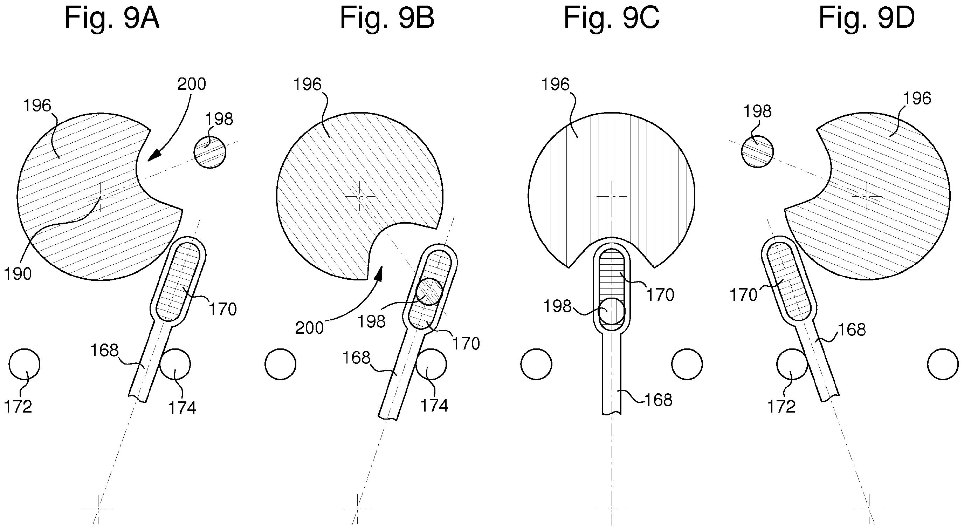

Le fonctionnement du système de couplage magnétique est représenté aux Figures 9A à 9D. Ce système est agencé pour permettre une oscillation de l'ancre de manière synchrone avec le résonateur entre deux positions d'arrêt stables de cette ancre dans lesquelles elle est maintenue alternativement durant une partie de chaque alternance de l'oscillation du résonateur. Ces deux positions d'arrêt stables sont définies par deux goupilles 172 et 174 limitant la course angulaire de la baguette 168 et contre lesquelles cette baguette vient alternativement s'appuyer durant un certain intervalle de temps dans chaque alternance du balancier sous l'effet de la répulsion du disque aimanté 196. La Figure 9A montre l'ancre dans une première position stable où elle est momentanément arrêtée et le balancier proche de son amplitude maximale. La cheville magnétique 198 et l'encoche 200 dans le disque aimanté central 196 sont situés angulairement hors de la zone de couplage avec l'aimant oblong 170 fixé sur la baguette 168 de l'ancre. La baguette est maintenue contre la goupille 174 par une force magnétique due à l'interaction magnétique entre le disque aimanté et la cheville aimantée, lesquels sont montés en répulsion magnétique. Lorsque le volant du balancier tourne en direction de sa position de repos, correspondant sur les Figures 9A-9D au demi-axe vertical partant de l'axe de rotation 90 vers le bas, la cheville aimantée est premièrement attirée par l'aimant 170 jusqu'à une position représentée à la Figure 9B où l'encoche 200 est alors située en face de cet aimant 170. Dans une première période du couplage magnétique utile, le balancier poursuit sa rotation sensiblement jusqu'à une position montrée à la Figure 9C en entraînant avec lui l'aimant 170 qui pénètre ainsi partiellement dans l'encoche. Ceci engendre une rotation de l'ancre jusqu'à un dégagement de la palette de l'ancre contre laquelle butait une dent de la roue d'échappement. Cette dent exerce alors de manière classique un couple sur l'ancre et l'aimant 170 est ainsi entraîné en rotation par la roue d'échappement. L'aimant 170 devient alors, dans une seconde période du couplage magnétique utile, l'élément moteur dans l'interaction entre cet aimant et la cheville aimantée; ce qui permet de fournir une impulsion d'entretien de l'oscillation du balancier, ce dernier continuant ensuite sa rotation jusqu'à une amplitude maximale, correspondant environ à la Figure 9D, alors que la baguette 168 est maintenue en appui contre la goupille 172. Une même interaction a lieu dans chaque alternance de l'oscillation du résonateur 154.

## Revendications

1. Mouvement horloger mécanique (2;22;32;72;152) comprenant un résonateur (10;10A;34;74;154), un échappement associé à ce résonateur et un affichage d'au moins une information temporelle, cet affichage étant entraîné par un dispositif moteur mécanique via un rouage compteur dont la marche est cadencée par l'échappement, au moins ledit résonateur étant logé dans une enceinte (14;14A;38;80;180) dans laquelle règne une pression réduite relativement à la pression atmosphérique; **caractérisé en ce que** ledit échappement est un échappement magnétique comprenant une roue d'échappement (36;76;158) couplée directement ou indirectement au résonateur via un système de couplage magnétique, ce système de couplage magnétique étant formé d'au moins un premier élément magnétique (40;84;170) et un deuxième élément magnétique (62A,63A,62B,63B; 108,109; 196,198) présentant au moins périodiquement une interaction magnétique entre eux; et **en ce que** ladite enceinte comprend une paroi (66;112;182) qui passe entre lesdits premier et deuxième éléments magnétiques de sorte que le premier élément magnétique est à l'intérieur de l'enceinte alors que le deuxième élément magnétique et ladite roue d'échappement sont à l'extérieur de cette enceinte, ladite paroi étant agencée pour permettre ladite interaction magnétique au travers de cette paroi.

2. Mouvement horloger mécanique selon la revendication 1, **caractérisé en ce que** ladite paroi de ladite enceinte est amagnétique au moins dans une région où est situé ledit système magnétique.

3. Mouvement horloger mécanique selon la revendication 1 ou 2, **caractérisé en ce que** ledit dispositif moteur mécanique, ledit rouage compteur et ledit affichage sont situés hors de ladite enceinte.

4. Mouvement horloger mécanique selon la revendication 3, **caractérisé en ce que** ledit résonateur (34) est couplé directement à ladite roue d'échappement (36), cette dernière portant ledit deuxième élément magnétique alors que ledit résonateur porte ledit premier élément magnétique.

5. Mouvement horloger mécanique selon la revendication 4, **caractérisé en ce que** ledit résonateur (34) est du type à diapason.

6. Mouvement horloger mécanique selon la revendication 4, **caractérisé en ce que** ledit résonateur comprend un balancier avec un arbre formé au moins partiellement par un matériau magnétique et pivotant sensiblement sans frottement mécanique entre deux paliers magnétiques.

7. Mouvement horloger mécanique selon la revendication 4, **caractérisé en ce que** ledit résonateur est formé par un volant de balancier et des lames flexibles qui relient ce volant à ladite enceinte, ces lames flexibles étant agencées pour permettre au balancier d'avoir une oscillation avec une fréquence déterminée.

8. Mouvement horloger mécanique selon la revendication 3, **caractérisé en ce que** ledit résonateur et ladite roue d'échappement sont couplés par un organe intermédiaire (78;160) non solidaire du résonateur ou de la roue d'échappement et oscillant de manière synchrone avec le résonateur, cet organe intermédiaire ayant une première partie (116,122; 170) directement couplée au résonateur et une deuxième partie (108,109; 166,167), distincte de la première partie, qui est directement couplée à la roue d'échappement.

9. Mouvement horloger mécanique selon la revendication 8, **caractérisé en ce que** ledit organe intermédiaire définit un arrêtoir.

10. Mouvement horloger mécanique selon la revendication 8 ou 9, **caractérisé en ce que** ledit système de couplage magnétique est prévu entre ladite deuxième partie de l'organe intermédiaire et la roue d'échappement; et **en ce que** ledit organe intermédiaire est situé à l'intérieur de ladite enceinte.

11. Mouvement horloger mécanique selon la revendication 8 ou 9, **caractérisé en ce que** ledit système de couplage magnétique est prévu entre ladite première partie de l'organe intermédiaire et le résonateur; et **en ce que** ledit organe intermédiaire est situé hors de ladite enceinte.

12. Mouvement horloger mécanique selon la revendication 11 dépendante de la revendication 9, **caractérisé en ce que** le système de couplage magnétique est agencé pour permettre une oscillation de l'arrêtoir (160) de manière synchrone avec le résonateur entre deux positions d'arrêt stables de cet arrêtoir dans lesquelles il est maintenu alternativement durant une partie de chaque alternance de l'oscillation du résonateur.

13. Mouvement horloger mécanique selon l'une quelconque des revendications 8 à 12, **caractérisé en ce qu'**il ne comprend dans ladite enceinte aucun mobile pivotant avec un frottement mécanique dans des paliers.

14. Mouvement horloger mécanique selon la revendication 13, **caractérisé en ce que** ledit résonateur comprend un balancier (75) avec un arbre (126) formé au moins partiellement par un matériau magnétique et pivotant sensiblement sans frottement mécanique entre deux paliers magnétiques (128,130).

15. Mouvement horloger mécanique selon la revendication 13, **caractérisé en ce que** ledit résonateur est formé par un volant (184) de balancier et des lames flexibles (186,188) qui relient ce volant à ladite enceinte, ces lames flexibles étant agencées pour permettre au balancier d'avoir une oscillation avec une fréquence déterminée.

16. Mouvement horloger mécanique selon l'une quelconque des revendications 13 à 15 dépendante de la revendication 10, **caractérisé en ce que** ledit organe intermédiaire (78) a un arbre (98) formé au moins partiellement par un matériau magnétique et pivotant sensiblement sans frottement mécanique entre deux paliers magnétiques (110,111).

17. Mouvement horloger mécanique selon l'une quelconque des revendications 13 à 15 dépendante de la revendication 10, **caractérisé en ce que** ledit organe intermédiaire est relié par des lames flexibles à ladite enceinte, ces lames flexibles étant agencées pour permettre ladite oscillation synchrone de l'organe intermédiaire avec ledit résonateur.

18. Mouvement horloger mécanique selon l'une quelconque des revendications 1 à 4 et 8 à 11, **caractérisé en ce que** ledit résonateur est formé par un balancier-spiral, et **en ce qu'**il comprend un dispositif de réglage de la fréquence d'oscillation du balancier-spiral comprenant une raquette (134) avec deux goupilles et un aimant (138), cet aimant étant situé à proximité d'une paroi de ladite enceinte de manière à pouvoir être magnétiquement couplé à un outil aimanté (140) situé hors de cette enceinte, la position angulaire de la raquette pouvant être variée par cet outil depuis l'extérieur de l'enceinte.

19. Mouvement horloger mécanique selon la revendication 18, **caractérisé en ce que** ladite raquette présente une zone centrale agencée entre un porte-piton (136) et un coq (132), ce coq étant situé au-dessus du porte-piton et de la raquette relativement au balancier-spiral et fixé au fond de ladite enceinte.

20. Mouvement horloger mécanique selon l'une quelconque des revendications précédentes, **caractérisé en ce qu'**un piège à gaz est agencé dans ladite enceinte.

## Patentansprüche

1. Mechanisches Uhrwerk (2; 22; 32; 72; 152), umfassend einen Resonator (10; 10A; 34; 74; 154), eine diesem Resonator zugeordnete Hemmung und eine Anzeige für mindestens eine Zeitinformation, wobei diese Anzeige durch eine mechanische Antriebsvorrichtung über ein Zählerräderwerk angetrieben wird, dessen Gang durch die Hemmung getaktet wird, wobei zumindest der Resonator in einer Kammer (14; 14A; 38; 80; 180) angeordnet ist, in der ein gegenüber dem Atmosphärendruck verringerter Druck herrscht; **dadurch gekennzeichnet, dass** die Hemmung eine magnetische Hemmung ist, die ein Hemmungsrad (36; 76; 158) umfasst, das über ein magnetisches Kopplungssystem direkt oder indirekt mit dem Resonator gekoppelt ist, wobei dieses magnetische Kopplungssystem aus mindestens einem ersten magnetischen Element (40; 84; 170) und einem zweiten magnetischen Element (62A, 63A, 62B, 63B; 108, 109; 196, 198) gebildet ist, die zumindest periodisch eine gegenseitige magnetische Wechselwirkung zeigen; und dass die Kammer eine Wand (66; 112; 182) umfasst, die zwischen dem ersten und dem zweiten magnetischen Element in einer Weise verläuft, dass sich das erste magnetische Element innerhalb dieser Kammer befindet, während sich das zweite magnetische Element und das Hemmungsrad außerhalb dieser Kammer befinden, wobei diese Wand dafür ausgelegt ist, die magnetische Wechselwirkung durch diese Wand hindurch zu ermöglichen.

2. Mechanisches Uhrwerk nach Anspruch 1, **dadurch gekennzeichnet, dass** die Wand der Kammer zumindest in einem Bereich, in dem das magnetische System angeordnet ist, nicht magnetisch ist.

3. Mechanisches Uhrwerk nach Anspruch 1 oder 2, **dadurch gekennzeichnet, dass** die mechanische Antriebsvorrichtung, das Zählerräderwerk und die Anzeige außerhalb der Kammer angeordnet sind.

4. Mechanisches Uhrwerk nach Anspruch 3, **dadurch gekennzeichnet, dass** der Resonator (34) direkt mit dem Hemmungsrad (36) gekoppelt ist, wobei dieses Letztere das zweite magnetische Element trägt, während der Resonator das erste magnetische Element trägt.

5. Mechanisches Uhrwerk nach Anspruch 4, **dadurch gekennzeichnet, dass** der Resonator (34) vom Stimmgabeltyp ist.

6. Mechanisches Uhrwerk nach Anspruch 4, **dadurch gekennzeichnet, dass** der Resonator eine Unruh mit einer Welle umfasst, die zumindest teilweise aus einem magnetischen Material gebildet ist und sich im Wesentlichen ohne mechanische Reibung zwischen zwei magnetischen Lagern dreht.

7. Mechanisches Uhrwerk nach Anspruch 4, **dadurch gekennzeichnet, dass** der Resonator durch ein Unruh-Schwungrad und biegsame Plättchen, die dieses Schwungrad mit der Kammer verbinden, gebildet ist, wobei diese biegsamen Plättchen dafür ausgelegt sind, der Unruh eine Schwingung mit einer bestimmten Frequenz zu ermöglichen.

8. Mechanisches Uhrwerk nach Anspruch 3, **dadurch gekennzeichnet, dass** der Resonator und das Hemmungsrad über ein Zwischenorgan (78; 160) gekoppelt sind, das nicht mit dem Resonator oder mit dem Hemmungsrad verbunden ist und synchron mit dem Resonator schwingt, wobei dieses Zwischenorgan einen direkt mit dem Resonator gekoppelten ersten Teil (116, 122; 170) und einen von dem ersten Teil verschiedenen und direkt mit dem Hemmungsrad gekoppelten zweiten Teil (108, 109; 166, 167) aufweist.

9. Mechanisches Uhrwerk nach Anspruch 8, **dadurch gekennzeichnet, dass** das Zwischenorgan eine Arretiervorrichtung definiert.

10. Mechanisches Uhrwerk nach Anspruch 8 oder 9, **dadurch gekennzeichnet, dass** das magnetische Kopplungssystem zwischen dem zweiten Teil des Zwischenorgans und dem Hemmungsrad vorgesehen ist; und dass das Zwischenorgan innerhalb der Kammer angeordnet ist.

11. Mechanisches Uhrwerk nach Anspruch 8 oder 9, **dadurch gekennzeichnet, dass** das magnetische Kopplungssystem zwischen dem ersten Teil des Zwischenorgans und dem Resonator vorgesehen ist; und dass das Zwischenorgan außerhalb der Kammer angeordnet ist.

12. Mechanisches Uhrwerk nach Anspruch 11, wenn abhängig von Anspruch 9, **dadurch gekennzeichnet, dass** das magnetische Kopplungssystem dafür ausgelegt ist, eine Schwingung der Arretiervorrichtung (160) synchron mit dem Resonator zwischen zwei stabilen Arretierpositionen dieser Arretiervorrichtung, in denen es während eines Teils jeder Halbperiode der Schwingung des Resonators abwechselnd gehalten wird, zu ermöglichen.

13. Mechanisches Uhrwerk nach einem der Ansprüche 8 bis 12, **dadurch gekennzeichnet, dass** es in der Kammer keinerlei Drehteil mit mechanischer Reibung in Lagern umfasst.

14. Mechanisches Uhrwerk nach Anspruch 13, **dadurch gekennzeichnet, dass** der Resonator eine Unruh (75) mit einer Welle (126) umfasst, die zumindest teilweise aus einem magnetischen Material gebildet ist und sich im Wesentlichen ohne mechanische Reibung zwischen zwei magnetischen Lagern (128, 130) dreht.

15. Mechanisches Uhrwerk nach Anspruch 13, **dadurch gekennzeichnet, dass** der Resonator durch ein Unruh-Schwungrad (184) und biegsame Plättchen (186, 188), die dieses Schwungrad mit der Kammer verbinden, gebildet ist, wobei diese biegsamen Plättchen dafür ausgelegt sind, der Unruh eine Schwingung mit einer bestimmten Frequenz zu ermöglichen.

16. Mechanisches Uhrwerk nach einem der Ansprüche 13 bis 15, wenn abhängig von Anspruch 10, **dadurch gekennzeichnet, dass** das Zwischenorgan (78) eine Welle (98) aufweist, die zumindest teilweise aus einem magnetischen Material gebildet ist und sich im Wesentlichen ohne mechanische Reibung zwischen zwei magnetischen Lagern (110, 111) dreht.

17. Mechanisches Uhrwerk nach einem der Ansprüche 13 bis 15, wenn abhängig von Anspruch 10, **dadurch gekennzeichnet, dass** dieses Zwischenorgan durch biegsame Plättchen mit der Kammer verbunden ist, wobei diese biegsamen Plättchen dafür ausgelegt sind, die synchrone Schwingung des Zwischenorgans mit dem Resonator zu ermöglichen.

18. Mechanisches Uhrwerk nach einem der Ansprüche 1 bis 4 und 8 bis 11, **dadurch gekennzeichnet, dass** der Resonator durch eine Unruh-Spiralfeder gebildet ist und dass es eine Vorrichtung zum Regulieren der Schwingungsfrequenz der Unruh-Spiralfeder umfasst, die einen Rücker (134) mit zwei Stiften und einem Magneten (138) umfasst, wobei dieser Magnet in der Nähe einer Wand der Kammer angeordnet ist, derart, dass er mit einem magnetisierten Werkzeug (140), das außerhalb dieser Kammer angeordnet ist, magnetisch koppelbar ist, wobei die Winkelposition des Rückers durch dieses Werkzeug von außerhalb der Kammer veränderbar ist.

19. Mechanisches Uhrwerk nach Anspruch 18, **dadurch gekennzeichnet, dass** der Rücker einen zwischen einem Spiralklötzchenträger (136) und einem Unruhkloben (132) angeordneten Mittelbereich aufweist, wobei dieser Unruhkloben in Bezug auf die Unruh-Spiralfeder über dem Spiralklötzchenträger und dem Rücker angeordnet ist und am Boden der Kammer befestigt ist.

20. Mechanisches Uhrwerk nach einem der vorhergehenden Ansprüche, **dadurch gekennzeichnet, dass** in der Kammer ein Getter angeordnet ist.

## Claims

1. Mechanical clock movement (2; 22; 32; 72; 152) comprising a resonator (10; 10A; 34; 74; 154), an escapement linked to this resonator and a display of at least one item of time information, wherein this display is driven by a mechanical drive device via a counter wheel train, the work rate of which is set by the escapement, and at least said resonator is housed in a chamber (14; 14A; 38; 80; 180), in which a reduced pressure in relation to atmospheric pressure prevails, **characterized in that** said escapement is a magnetic escapement comprising an escape wheel (36; 76; 158) coupled directly or indirectly to the resonator via a magnetic coupling system, wherein this magnetic coupling system is formed from at least one first magnetic element (40; 84; 170) and a second magnetic element (62A, 63A, 62B, 63B; 108, 109, 196, 198) that exhibit a magnetic interaction at least periodically between them; and **in that** said chamber comprises a wall (66; 112; 182), which runs between said first and second magnetic elements so that the first magnetic element is inside the chamber, whereas the second magnetic element and said escape wheel are outside this chamber, and said wall is arranged to permit said magnetic interaction through this wall.

2. Mechanical clock movement according to claim 1, **characterized in that** said wall of said chamber is non-magnetic at least in an area where said magnetic system is located.

3. Mechanical clock movement according to claim 1 or 2, **characterized in that** said mechanical drive device, said counter wheel train and said display are located outside said chamber.

4. Mechanical clock movement according to claim 3, **characterized in that** said resonator (34) is coupled directly to said escape wheel (36), the latter bearing said second magnetic element while said resonator bears said first magnetic element.

5. Mechanical clock movement according to claim 4, **characterized in that** said resonator (34) is a tuning fork-type resonator.

6. Mechanical clock movement according to claim 4, **characterized in that** said resonator comprises a balance with a shaft, which is formed at least partially from a magnetic material and pivots substantially without mechanical friction between two magnetic bearings.

7. Mechanical clock movement according to claim 4, **characterized in that** said resonator is formed by a balance wheel and flexible blades, which connect this wheel to said chamber, wherein these flexible blades are arranged to allow the balance to perform an oscillation with a determined frequency.

8. Mechanical clock movement according to claim 3, **characterized in that** said resonator and said escape wheel are coupled by an intermediate member (78; 160) that is not integral to the resonator or the escape wheel and oscillates synchronously with the resonator, wherein this intermediate member has a first part (116, 122; 170) that is coupled directly to the resonator and a second part (108, 109; 166, 167) separate from the first part that is coupled directly to the escape wheel.

9. Mechanical clock movement according to claim 8, **characterized in that** said intermediate member defines a retaining catch.

10. Mechanical clock movement according to claim 8 or 9, **characterized in that** said magnetic coupling system is provided between said second part of the intermediate member and the escape wheel, and **in that** said intermediate member is located inside said chamber.

11. Mechanical clock movement according to claim 8 or 9, **characterized in that** said magnetic coupling system is provided between said first part of the intermediate member and the resonator, and **in that** said intermediate member is located outside said chamber.

12. Mechanical clock movement according to claim 11 dependent on claim 9, **characterized in that** the magnetic coupling system is arranged to allow the retaining catch (160) to oscillate synchronously with the resonator between two stable stop positions of this retaining catch, in which it is held alternately during a portion of each alternation of the oscillation of the resonator.

13. Mechanical clock movement according to any one of claims 8 to 12, **characterized in that** it does not comprise any wheel pivoting in bearings with a mechanical friction in said chamber.

14. Mechanical clock movement according to claim 13, **characterized in that** said resonator comprises a balance (75) with a shaft (126), which is formed at least partially from a magnetic material and pivots substantially without mechanical friction between two magnetic bearings (128, 130).

15. Mechanical clock movement according to claim 13, **characterized in that** said resonator is formed by a balance wheel (184) and flexible blades (186, 188), which connect this wheel to said chamber, wherein these flexible blades are arranged to allow the balance to perform an oscillation with a determined frequency.

16. Mechanical clock movement according to any one of claims 13 to 15 dependent on claim 10, **characterized in that** said intermediate member (78) has a shaft (98), which is formed at least partially from a magnetic material and pivots substantially without mechanical friction between two magnetic bearings (110, 111).

17. Mechanical clock movement according to any one of claims 13 to 15 dependent on claim 10, **characterized in that** said intermediate member is connected to said chamber by flexible blades, wherein these flexible blades are arranged to allow said synchronous oscillation of the intermediate member with said resonator.

18. Mechanical clock movement according to any one of claims 1 to 4 and 8 to 11, **characterized in that** said resonator is formed by a spring balance, and **in that** it comprises a device for regulating the oscillation frequency of the spring balance comprising an index (134) with two pins and a magnet (138), wherein this magnet is located close to a wall of said chamber to enable it to be magnetically coupled to a magnetized tool (140) located outside this chamber and the angular position of the index can be varied by this tool from outside the chamber.

19. Mechanical clock movement according to claim 18, **characterized in that** said index has a central zone attached between a stud holder (136) and a balance cock (132), wherein this balance cock is located above the stud holder and the index in relation to the spring balance and secured to the base of said chamber.

20. Mechanical clock movement according to any one of the preceding claims, **characterized in that** a gas trap is arranged in said chamber.
